# NEUE EUROPÄISCHE PATENTSCHRIFT

(11) **EP 1 124 000 B2**
(45) Veröffentlichungstag und Bekanntmachung des Hinweises auf die Entscheidung über den Einspruch: **01.08.2012**
(45) Hinweis auf die Patenterteilung: 19.01.2005
(21) Anmeldenummer: 01101561.7
(22) Anmeldetag: 25.01.2001
(51) Int. Cl.: D21F 1/70, B01F 3/04, D21B 1/32, B01F 3/08, B01F 5/02, B01F 5/04, B01F 5/06, B01F 13/10, B03D 1/14

(54) **Verfahren und Vorrichtung zum Belüften von Dispersionen**
Method and device for aerating dispersions
Procédé et dispositif pour l'aération de dispersions

(30) Priorität: 03.02.2000 AT 167002000
(43) Veröffentlichungstag der Anmeldung: 16.08.2001
(73) Patentinhaber: Andritz AG, 8045 Graz (AT)
(72) Erfinder: Scherzinger, Bernhard, Dipl.Ing.Dr., 8010 Graz (AT); Gabl, Helmuth, Dipl.Ing.Dr., 8046 Graz (AT); Hertl Erwin, 8111 Judendorf (AT)
(74) Vertreter: Tschinder, Thomas

(56) Entgegenhaltungen:
- EP-B- 0 211 834
- DE-A- 3 529 638
- DE-A- 3 808 154
- DE-A- 19 845 536
- DE-C- 19 831 530
- PROF. BAHR ET AL: '5 Jahre Betriebserfahrung mit der pneumatischen Flotation' AUFBEREITUNGS-TECHNIK Bd. 1/1987, Seiten 1 - 5

## Beschreibung

Die Erfindung betrifft ein Verfahren zur Flotation beim Deinken von Faserstoffsuspensionen, wobei die mit Schmutzpartikeln beladene Faserstoffsuspension sowie Gas, insbesondere Luft, in einen Behälter eingedüst werden, wobei durch die Injektorwirkung das Gas, insbesondere Luft, mindestens an zwei hintereinander liegenden Stellen angesaugt und mit der Suspension vermischt wird. Weiters betrifft die Erfindung eine Vorrichtung zur Durchführung des Verfahrens.

Die Deinking - Flotation ist ein mechanisches Verfahren zur Abtrennung von Störstoffen und Druckfarbenpartikel aus insbesondere in der Altpapieraufbereitung hergestellten Faserstoffsuspensionen. Dieses Verfahren erfordert die Erzeugung von Gasblasen in geeigneter Menge und Größenverteilung. Hydrophobe oder mittels oberflächenaktiven Stoffen hydrophobierte Stoffe wie Druckfarbenpartikel oder Stickies werden durch die anhaftenden Gasblasen an die Flüssigkeitsoberfläche getragen und können dort als Schaum entfernt werden. Man spricht von selektiver Flotation, weil der Faserstoff aufgrund seines hydrophilen Charakters mit dem Gutstoff ausgetragen wird. Verfahren dieser Art sind in zahlreichen geometrischen Modifikationen z.B. aus der DE 41 16 916 C2 oder aus EP 0 211 834 B1 bekannt und haben einen hohen technischen Standard erreicht. Weiters ist aus der DE 35 29 638 A1 eine Begasungsvorrichtung bekannt, bei der durch stufenförmige Erweiterungen Luft angesaugt wird, wobei mindestens eine bestimmte Mischlänge vorzusehen ist. In der DE 38 08 154 A1 werden verschiedenartige Ausführungen von Diffusorplatten dargestellt, wobei diese rotierend angetrieben werden. Zur Erzeugung von Gasblasen und Durchmischung mit der Faserstoffsuspension hat sich weiters auch der Einsatz von selbstansaugenden Injektoren bewährt. Diese bestehen prinzipiell aus einer Treibstrahldüse, einem Mischrohr bzw. Impulsaustauschrohr und einem Diffusor. Dabei erzeugt der nach dem Freistrahlprinzip aus der Treibstrahldüse austretende Flüssigkeitsstrom einen Unterdruck. Dadurch wird Gas angesaugt und infolge des Impulsaustausches zwischen Flüssigkeit und Gas im Mischrohr mit der Flüssigkeit vermischt. Am Austritt des zur Energierückgewinnung dienenden Diffusors entsteht eine Faserstoff-Blasen-Dispersion. Aus der Anwendung der bekannten Verfahren bzw. Injektoren ergeben sich jedoch für die selektive Flotation von Faserstoffsuspensionen mehrere Nachteile:
Die Sogwirkung der bekannten Injektoren beim Betrieb mit Faserstoffsuspensionen ist zu gering und die vom bekannten Injektor erzeugte Biasengrößenverteilung ist nicht optimal gestaltet, um den Anforderungen einer selektiven Flotation gerecht zu werden.

Der Erfindung liegt daher die Aufgabe zugrunde, einen Injektor mit höherer Sogwirkung und optimaler Blasengrößenverteilung für die Anwendung in der Deinking - Flotation zu gestalten.

Das erfindungsgemäße Verfahren ist daher dadurch gekennzeichnet, dass der durch die Ansaugung und Vermischung entstandene Gas-Flüssigkeitsstrom nach der ersten Stufe in einen Freistrahl übergeführt wird. Durch das mehrstufige Ansaugen kann in der ersten Stufe der Faserstoff mit Gas aufgelockert und dadurch in der zweiten Stufe eine bessere Aufspreizung des Freistrahls und somit eine verbesserte Sogwirkung und entsprechende Erzeugung von Blasen, insbesondere mit Reduktion des feinblasigen Anteils zur Vermeidung von Feststoffverlusten, erzielt werden, wobei die Ausnutzung der kinetischen Energie des Strahls zur nochmaligen Ansaugung von Gas verbessert wird.

Eine vorteilhafte Weiterbildung der Erfindung ist dadurch gekennzeichnet, dass etwa 20 - 95 % der gesamten angesaugten Gasmenge, insbesondere Luftmenge, in der ersten Stufe angesaugt werden. Durch die Aufteilung der Ansaugung der Gas-, insbesondere Luft- Menge auf mehrere Ansaugstellen kann eine gleichmäßigere Vermischung der Suspension mit dem Gas erzielt werden. Dadurch lässt sich gezielt eine geeignete Blasengröße einstellen Eine günstige Weiterbildung der Erfindung ist dadurch gekennzeichnet, dass die Gas- bzw. Luftbeladung der Faserstoffsuspension direkt nach der Eindüsung ca. 50 - 150% beträgt.

Die Erfindung betrifft auch eine Flotationseinrichtung zum Deinken von Faserstoffsuspensionen mit einem Injektor, die dadurch gekennzeichnet ist, dass der Injektor aus mindestens einer Treibstrahldüse, mindestens einem Misch- bzw. Turbulenzrohr und einem Diffusor besteht und dass mindestens zwei Ansaugstellen in Strömungsrichtung hintereinander, jeweils im Bereich des Austritts einer Treibstrahldüse angeordnet sind. Durch das mehrstufige Ansaugen kann in der ersten Stufe der Faserstoff mit Gas aufgelockert und dadurch in der zweiten Stufe eine bessere Aufspreizung des Freistrahls und somit eine verbesserte Sogwirkung und entsprechende Erzeugung von Blasen, insbesondere mit Reduktion des feinblasigen Anteils zur Vermeidung von Feststoffverlusten, erzielt werden.

Eine günstige Weiterbildung der Erfindung ist dadurch gekennzeichnet, dass nach der ersten Ansaugstelle eine Erweiterung des Injektionskanales vorgesehen ist. So kann günstig eine gute Ausnutzung der kinetischen Energie des Strahles erfolgen.

Eine vorteilhafte Weiterbildung der Erfindung ist dadurch gekennzeichnet, dass am Ende des Injektorkanales eine Platte quer zur Strömungsrichtung angeordnet ist. Diese Platte dient als Radialdiffusor zur Energierückgewinnung aus dem Flüssigkeitsstrahl.

Eine vorteilhafte Ausgestaltung der Erfindung ist dadurch gekennzeichnet, dass die Platte schräg zur Strömungsrichtung angeordnet ist.
Eine günstige Weiterbildung der Erfindung ist dadurch gekennzeichnet, daß die Platte Einbauten zur gezielten Strömungsführung aufweist. Dadurch kann der Injektor auch in beliebiger Position in der Flotationszelle angeordnet werden.

Eine günstige Ausgestaltung der Erfindung ist dadurch gekennzeichnet, daß mindestens zwei Injektoren parallel in Form eines Injektorbündels angeordnet sind. Doch eine derartige Ausführung können auch große Durchsätze entsprechend verarbeitet werden.

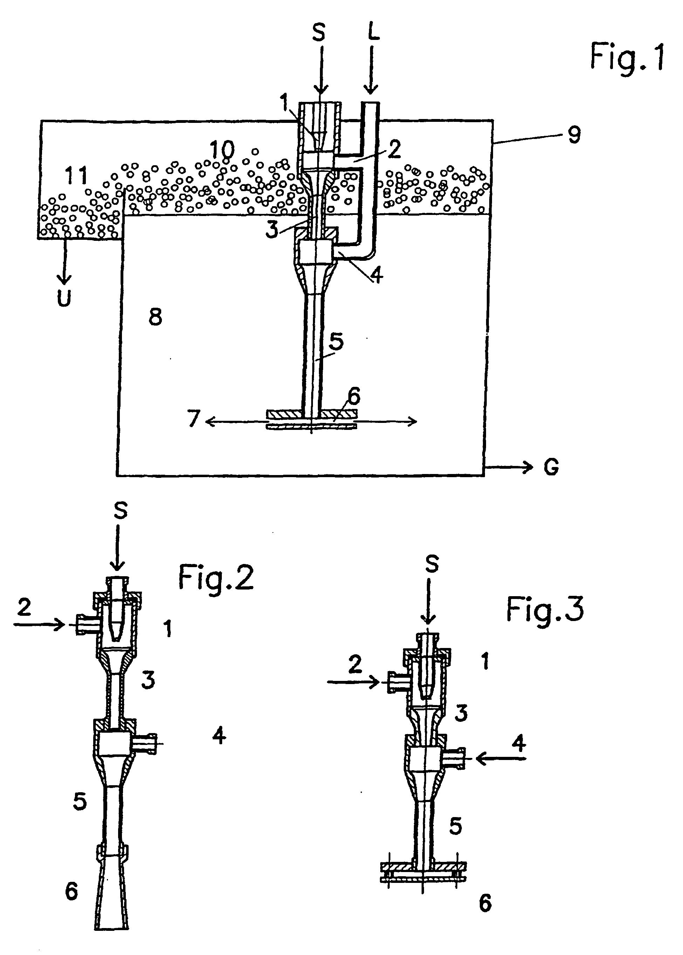

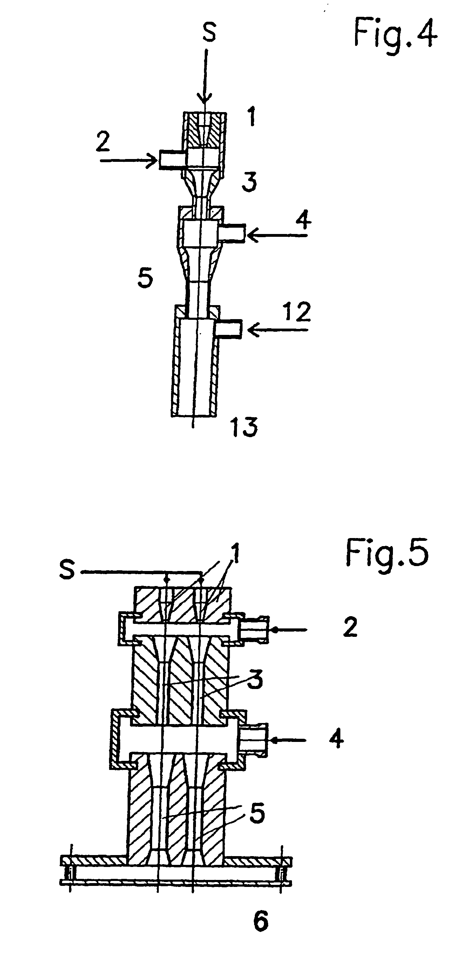

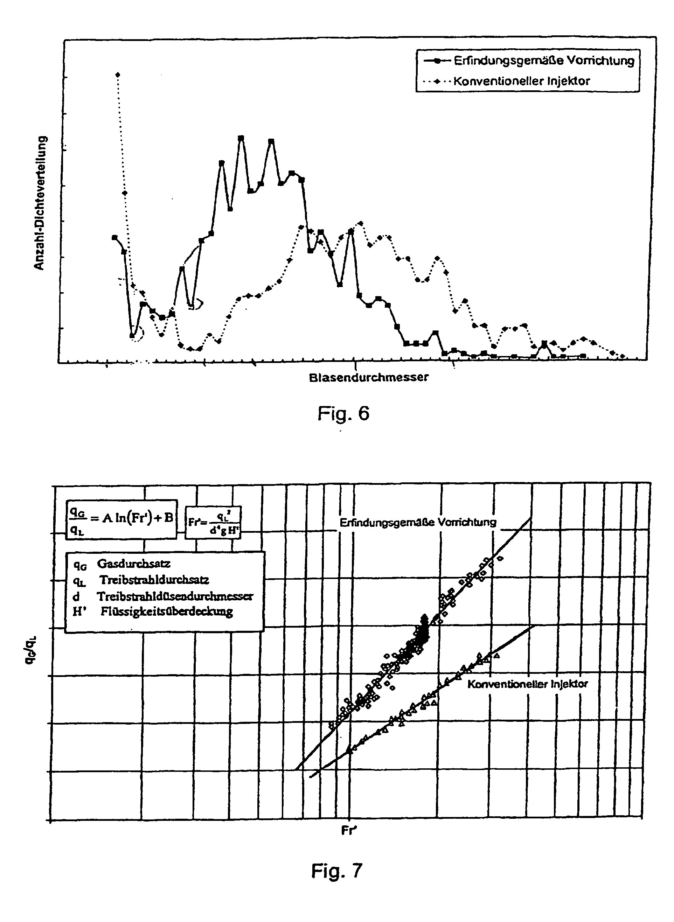

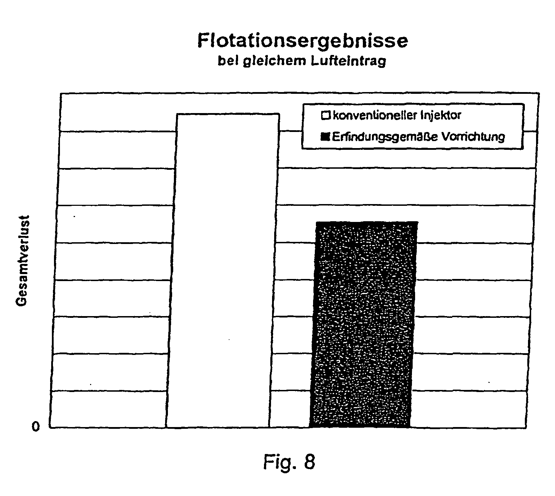

Die Erfindung wird nun an Hand der Zeichnungen beispielhaft beschrieben, wobei
Fig. 1 eine Anordnung einer Variante der Erfindung in einer Flotationszelle, Fig. 2 eine alternative Variante, Fig. 3 eine weitere Variante der Erfindung, Fig. 4 eine Variante mit drei Gasansaugstellen, Fig. 5 eine Variante mit Injektorbündel, Fig. 6 ein Diagramm einer Blasendurchmesserverteilung, Fig. 7 die Luftbeladung für einen konventionellen Injektor verglichen mit der erfindungsgemäßen Vorrichtung, und Fig. 8 den Flotationsverlust einer erfindungsgemäßen Vorrichtung gegenüber einer Vorrichtung aus dem Stand der Technik darstellen.
   In Fig. 1 erkennt man den schematisch dargestellten Flotationsapparat, in dem die erfindungsgemäße Vorrichtung eingebaut ist. Die Flotationszelle 9 ist zum überwiegenden Teil mit Suspension 8 gefüllt, an deren Oberfläche sich ein Schaum 10 bildet, der einen möglichst großen Teil der auszuflotierenden Störstoffe und Druckfarbenpartikel enthält. Dieser Schaum fließt über eine Schaumrinne 11 als Überlauf U ab. Die Faserstoffsuspension S gelangt durch die Treibstrahldüse 1 in den Injektor. Durch das Freistrahlprinzip wird Luft an der ersten Ansaugstelle 2 eingebracht und im ersten Impulsaustauschrohr 3 mit der Faserstoffsuspension vermengt. Die so mit Luftblasen aufgelockerte Suspension saugt nochmals Luft 4 an der zweiten Ansaugstelle an, die im zweiten Impulsaustauschrohr 5 eingemischt wird. Die Luftansaugstellen sind hier mit einem aus der Suspension hinausragenden Rohr verbunden, bei dem an der Oberfläche der Suspension Luft L eintritt. Die Blasen-Faserstoff-Dispersion 7 verläßt nach einem Radialdiffusor 6 zur Energierückgewinnung den Injektor. Die so gebildeten Blasen haften an den hydrophoben Störstoffen an und tragen sie zur Oberfläche. Die durch Flotation gereinigte Suspension tritt als Gutstoff G aus der Flotationszelle aus.
Fig. 2 stellt eine alternative Variante eines erfindungsgemäßen Injektors dar, wobei hier die Gasansaugstutzen auf unterschiedlichen Seiten angeordnet sind. Ein wesentlicher Unterschied gegenüber Fig. 1 besteht jedoch darin, daß ein sich konisch erweiternder Diffusor nach der zweiten Stufe angeordnet ist.
Fig. 3 zeigt eine erfindungsgemäße Vorrichtung mit einem konischen ersten Impulsaustauschrohr 3, bei dem eine zweite Treibstrahldüse analog der Treibstrahldüse 1 angewendet wird, um auch in der zweiten Stufe eine hohe Sogeffizienz zu erreichen.
Fig. 4 zeigt eine erfindungsgemäße Ausführung, bei der drei Luftansaugstellen 2, 4, 12 vorgesehen sind, wobei nach dem dritten Impulsaustauschrohr 13 ein Diffusor dargestellt ist.
Fig. 5 zeigt eine Variante als Injektorenbündel, wobei hier zwei Injektoren parallel nebeneinander angeordnet sind. Diese Anordnung besteht aus einem oberen Teil, in dem die Treibstrahldüsen 1 angeordnet sind, einem gemeinsamen Zwischenraum in den der Luftansaugstutzen 2 mündet, im weiteren einen Block mit parallel geschalteten Impulsaustauschrohren 3. Dieser Block ist wiederum verbunden mit einem gemeinsamen Zwischenraum in den die Gasansaugung 4 mündet. Daran schließt sich ein gemeinsamer Block an, in dem die zweiten Impulsaustauschrohre 5 angeordnet sind. Abschließend münden beide Impulsaustauschrohre 5 in einen Radialdiffusor 6. Grundsätzlich können auch mehrere Injektoren in einem derartigen Injektorenbündel zusammengefaßt werden.
Fig. 6 zeigt nun die Verteilung des Blasendurchmessers bei einem konventionellen Injektor im Vergleich mit einem Injektor gemäß der Erfindung. Man erkennt hier, daß beim Injektor gemäß der Erfindung im feinblasigen Bereich wesentlich weniger Blasen mit einem Durchmesser < 0,5 mm vorhanden sind, als im Stand der Technik. Hier beträgt die Reduktion ca 50 %. Die Breite der Verteilung wird aber im Vergleich zum konventionellen Injektor trotzdem beibehalten. Insgesamt treten dadurch geringere Feststoff- (Faser-)verluste auf.

Die Sogwirkung eines Injektors wird vom Treibstrahldurchsatz, dem Treibstrahldüsendurchmesser, der Flüssigkeitsüberdeckung und der Dichte des Treibstrahls bestimmt. Eine derartige Sogcharakteristik ist in Fig. 7 dargestellt. Hier wurde die Luftbeladung q_{G}/q_{L} als Funktion der Froude-Kennzahl dargestellt. Es ist hier erkennbar, daß diese Luftbeladung durch die erfindungsgemäße Vorrichtung gegenüber konventiellen Injektoren wesentlich gesteigert werden konnte.

Fig. 8 zeigt schematisch ein Flotationsergebnis bei gleichem Lufteintrag im Vergleich zu einem konventionellen Injektor. Man erkennt, daß der Gesamtverlust an Faserstoffen etwa um ein Drittel reduziert werden konnte. Durch die vorliegende Erfindung ist es jedoch möglich, wesentlich mehr Luft einzubringen und dadurch auch eine verbesserte Entfernung von Störstoffen zu erreichen.

## Patentansprüche

1. Verfahren zur Flotation beim Deinken von Faserstoffsuspensionen, wobei die mit Schmutzpartikeln beladene Faserstoffsuspension sowie Gas, insbesondere Luft, in einen Behälter eingedüst werden, wobei durch die Injektorwirkung das Gas, insbesondere Luft, mindestens an zwei hintereinander liegenden Stellen angesaugt und mit der Suspension vermischt wird, **dadurch gekennzeichnet, dass** der durch die Ansaugung und Vermischung entstandene Gas-Flüssigkeitsstrom nach der ersten Stufe in einen Freistrahl übergeführt wird.

2. Verfahren nach Anspruch 1, **dadurch gekennzeichnet, dass** etwa 20- bis 95% der gesamten angesaugten Gasmenge, insbesondere Luftmenge, in der ersten Stufe angesaugt werden.

3. Verfahren nach einem der Ansprüche 1 oder 2, **dadurch gekennzeichnet, dass** die Gas- bzw. Luftbeladung der Faserstoffsuspension direkt nach der Eindüsung ca. 50 % bis 150 % beträgt.

4. Flotationseinrichtung zum Deinken von Faserstoffsuspensionen, mit einem Injektor, **dadurch gekennzeichnet, dass** der Injektor aus mindestens einer Treibstrahldüse, mindestens einem Misch- bzw. Turbulenzrohr und einem Diffusor besteht und dass mindestens zwei Ansaugstellen (2, 4, 12) in Strömungsrichtung hintereinander, jeweils im Bereich des Austritts einer Treibstrahldüse angeordnet sind.

5. Vorrichtung nach Anspruch 4, **dadurch gekennzeichnet, dass** nach der ersten Ansaugstelle (2) eine Erweiterung des Injektorkanals vorgesehen ist.

6. Vorrichtung nach Anspruch 4 oder 5, **dadurch gekennzeichnet, dass** am Ende des Injektorenkanales eine Platte quer zur Strömungsrichtung angeordnet ist, die als Radialdiffusor (6) wirkt.

7. Vorrichtung nach Anspruch 6, **dadurch gekennzeichnet, dass** die Platte schräg zur Strömungsrichtung angeordnet ist.

8. Vorrichtung nach Anspruch 6, **dadurch gekennzeichnet, dass** die Platte Einbauten zur gezielten Strömungsführung aufweist.

9. Vorrichtung nach einem der Ansprüche 4 bis 8, **dadurch gekennzeichnet, dass** mindestens zwei Injektoren parallel in Form eines Injektorenbündels angeordnet sind.

## Claims

1. Process for flotation of pulp suspensions in the deinking process, where the pulp suspension containing dirt particles is sprayed into a tank together with gas, particularly air, where the gas, particularly air, is sucked in by the injector effect at a minimum of two successive points and mixed with the suspension, **characterised by** the gas and liquid stream generated by sucking and mixing being transferred into a free jet after the first stage.

2. Process according to Claim 1, **characterised by** some 20 to 95% of the entire quantity of gas, particularly air, sucked in being taken in the first stage.

3. Process according to one of Claims 1 or 2, **characterised by** the gas/air loading of the pulp suspension amounting to approximately 50-150% directly after spraying in.

4. Flotation device for deinking of pulp suspensions, with an injector, **characterised by** the injector consisting of at least one injecting jet nozzle, at least one mixing or turbulence tube and a diffuser, and by at least two suction points (2, 4, 12) being arranged in series in flow direction, each in the area of the discharge of one injecting jet nozzle.

5. Device according to Claim 4, **characterised by** the injector channel widening after the first suction point (2).

6. Device according to Claim 4 or 5, **characterised by** a panel being mounted at the end of the injector channel crosswise to the flow direction and this panel acting as a radial diffuser (6).

7. Device according to Claim 6, **characterised by** the panel being mounted on a slant to the flow direction.

8. Device according to Claim 6, **characterised by** the panel containing baffles for targeted guidance of the flow.

9. Device according to one of Claims 4 to 8, **characterised by** a minimum of two injectors being mounted in parallel in the form of an injector group.

## Revendications

1. Procédé de flottation pour le désencrage de suspensions de pâte fibreuse, où la suspension de pâte fibreuse chargée de contaminants ainsi que du gaz, surtout de l'air, sont injectés dans un bac, le gaz, surtout de l'air, étant aspiré par l'effet injecteur à deux points successifs au moins et mélangé avec la suspension, **caractérisé en ce que** le courant de gaz/liquide créé par l'aspiration et le mélangeage est transféré à un jet libre après la première étape.

2. Procédé selon la revendication 1, **caractérisé en ce qu'**environ 20 à 95% de la quantité entière de gaz, surtout d'air, en aspiration est aspirée dans la première étape.

3. Procédé selon l'une des revendications 1 ou 2, **caractérisé en ce que** la charge de gaz ou d'air dans la suspension de pâte fibreuse directement après l'injection s'élève à entre environ 50 % et 150%.

4. Dispositif de flottation pour le désencrage de suspensions de pâte fibreuse, comportant un injecteur, **caractérisé en ce que** l'injecteur est constitué d'au moins une buse à injection à jet, d'au moins un tube de mélangeage et/ou de turbulence et d'un diffuseur, et qu'au moins deux points d'aspiration (2, 4, 12) sont successifs au sens d'écoulement, chacun dans la zone de décharge d'une buse à injection à jet.

5. Dispositif selon la revendication 4, **caractérisé en ce qu'**un élargissement du canal d'injection est prévu après le premier point d'aspiration (2).

6. Dispositif selon la revendication 4 ou 5, **caractérisé en ce qu'**à l'issue du canal d'injection une plaque, qui sert de diffuseur radial (6), est disposée en travers du sens d'écoulement.

7. Dispositif selon la revendication 6, **caractérisé en ce que** la plaque est disposée en position oblique par rapport au sens d'écoulement.

8. Dispositif selon la revendication 6, **caractérisé en ce que** la plaque comporte des chicanes pour le guidage méthodique du courant.

9. Dispositif selon l'une des revendications 4 à 8, **caractérisé en ce qu'**au moins deux injecteurs sont disposés en parallèle sous forme d'un groupe d'injecteurs.
